# EUROPEAN PATENT APPLICATION

(11) **EP 4 782 873 A1**
(43) Date of publication of application: **29.07.2026**
(21) Application number: 25224229.2
(22) Date of filing: 17.12.2025
(51) Int. Cl.: G01S 7/41, G01S 13/86, G01S 13/931, G06V 10/82, G01S 13/89

(54) **OBJECT DETECTION METHOD, APPARATUS, ELECTRONIC DEVICE, PRODUCT AND MEDIUM**

(30) Priority: 27.01.2025 CN 202510126478
(71) Applicant: Robert Bosch GmbH, 70442 Stuttgart (DE)
(72) Inventor: SUN, Hao, Shanghai, 200335 (CN)

(57) **Abstract**

The present disclosure relates to an object detection method, an apparatus, an electronic device, a computer program product, and a machine-readable storage medium. The method includes determining radar point cloud data of a target object based on radar point cloud input data. The method further includes extracting a radar feature of the target object based on the radar point cloud data of the target object. Furthermore, the method further includes generating radar point cloud output data that identifies the target object with text based on the radar feature of the target object. In this way, the radar point cloud data corresponding to the target object in the radar point cloud input data can be identified and the corresponding text can be identified at the relevant target object, which not only saves the cost of data collection and labeling, but also expands the types of objects based on radar detection, enabling accurate identification of multiple types of target objects.

## Description

### Technical Field

The present disclosure relates to the computer field, and more particularly, to an object detection method, an apparatus, an electronic device, a computer program product, and a machine-readable storage medium.

### Background

An open world object detection requires the use of object detection algorithms to identify unknown and known objects. Object detection algorithms typically focus on identifying categories found in a dataset on which they are trained. The more data collected and the more categorized, the more types of objects can be identified.

In some related techniques, the categories of objects of radar data sets on which radar object detection relies are limited, and a significant amount of data collection and labeling costs are required to identify more categories of objects.

### Summary of the Invention

Embodiments of the present disclosure provide an object detection method, an apparatus, an electronic device, a computer program product, and a machine-readable storage medium.

In a first aspect of the present disclosure, an object detection method is provided. The method comprises determining radar point cloud data of a target object based on radar point cloud input data. The method further comprises extracting a radar feature of the target object based on the radar point cloud data of the target object. In addition, the method further comprises generating radar point cloud output data that identifies the target object with text based on the radar feature of the target object.

In a second aspect of the present disclosure, an object detection apparatus is provided. The apparatus comprises a determination module configured to determine radar point cloud data of a target object based on the radar point cloud input data. The apparatus further comprises an extraction module configured to extract a radar feature of the target object based on the radar point cloud data of the target object. In addition, the apparatus further comprises a generation module configured to generate radar point cloud output data that identifies the target object with text based on the radar feature of the target object.

According to a third aspect of the present disclosure, an electronic device is provided. The electronic device includes at least one processor and a memory. The memory is coupled to the at least one processor and has instructions stored thereon that, when executed by the at least one processor, cause the electronic device to execute the method provided according to the first aspect of the present disclosure.

In a fourth aspect of the present disclosure, a computer program product is provided. The computer program product includes a computer program executed by a processor to implement the method provided according to the first aspect of the present disclosure.

In a fifth aspect of the present disclosure, a machine-readable storage medium is provided. The machine-readable storage medium has machine-executable instructions stored thereon, wherein the machine-executable instructions are executed by a processor to implement the method provided according to the first aspect of the present disclosure.

It will be understood that the content described in the Summary of the Invention is not intended to limit key or important features of the embodiments of the present disclosure, nor is it intended to limit the scope of the present disclosure. Other features of the present disclosure will become readily understood by the following description.

### Brief Description of the Drawings

The above and other features, advantages and aspects of various examples of the present disclosure will become more apparent in combination with the accompanying drawings and with reference to the following detailed description. In the accompanying drawings, the same or similar reference numerals denote the same or similar elements, wherein:
FIG. 1 shows a schematic diagram of an example environment in which some embodiments of the present disclosure may be implemented;
FIG. 2 shows a flow chart of an object detection method of some embodiments of the present disclosure;
FIG. 3 shows a system architecture diagram of object detection of some embodiments of the present disclosure;
FIG. 4 shows a schematic diagram of a principle process of a radar feature extraction model in a training stage of some embodiments of the present disclosure;
FIG. 5 shows a schematic diagram of a radar feature determination process of a target object of some embodiments of the present disclosure;
FIG. 6 shows a schematic diagram of a radar-text pairing process of some embodiments of the present disclosure;
FIG. 7 shows a schematic diagram of an example process for object detection using a trained radar feature extraction model of some embodiments of the present disclosure;
FIG. 8 shows an example block diagram of an object detection apparatus of some embodiments of the present disclosure;
FIG. 9 shows a structural schematic diagram of an electronic device of some embodiments of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first," "second," etc. may refer to different objects or the same object. Other explicit and implicit definitions may be included below.

As described above, the accuracy of object detection technology identification relies on data sets. The object detection technology can identify a variety of types of objects when more data is collected and more categorized. Both image-based object detection technology and radar-based object detection technology rely on labeled datasets. Collecting and labeling these datasets cost a lot.

In relevant technologies, radar detection can generally identify automobiles and people when applied in intelligent driving scenarios. For other unknown objects, it needs to go through labeling training before identification. However, a variety of unknown objects can appear on roads, including animals, trees, various types of motor vehicles, and traffic facilities. If these unknown objects need to be identified, a large amount of data needs to be collected and labeled. In addition, if other radar detection application scenarios have different types of unknown objects depending on the scenarios, it is necessary to collect and label a large amount of data again according to the features of the scenario.

To this end, embodiments of the present disclosure propose an object detection scheme that achieves alignment of radar and text features with respect to the object granularity. In an embodiment of the present disclosure, a text feature aligned with a radar feature of a target object may be determined based on radar point cloud data of the target object, and the text feature corresponds to text, so that the category of the target object can be determined based on the text. The target object in the radar point cloud data is then labeled based on the text. Here, the feature generated by a corresponding text aligned with the radar feature is determined by a trained radar feature extraction model. For example, the radar feature extraction model aligns the features of a radar, an image, and a text with respect to the granularity of a target object by learning the image-text alignment results of an image-text matching model.

In this way, it is possible to identify the category of the target object based on the trained radar feature extraction model and to identify a variety of types of objects without relying on a labeled dataset. Moreover, the method can be applied to various application scenarios without the need to re-collect and label data according to the features of the scenario. Instead, it uses, for example, the image and text matching model as a teacher model for learning. By learning an alignment relationship between images and text already learned by the teacher model, it can identify various types of objects in various scenarios.

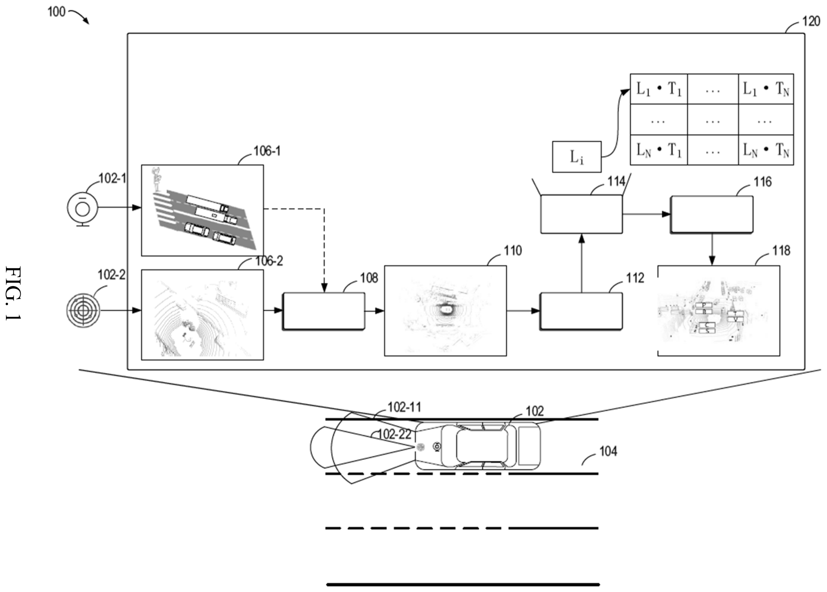

FIG. 1 shows a schematic diagram of an example environment 100 in which some embodiments of the present disclosure may be implemented. As shown in FIG. 1, the environment 100 includes a vehicle 102 and a road 104 on which the vehicle 102 travels. The vehicle 102 is provided with a camera device 102-1 and a radar detection device 102-2. The camera device 102-1 is used to acquire environmental images within a range 102-11 in front of the vehicle 102, and the radar detection device 102-2 is used to detect whether there are objects in front of the vehicle within a detection range 102-22. The radar detection device 102-2 may be a laser radar detection device (e.g., the device outputs x, y, z coordinates in three-dimensional space and reflection intensity of detection points, and the above parameters constitute radar point cloud data), a millimeter wave radar detection device (e.g., the device outputs coordinates x, y in a two-dimensional plane, power, and speed of detection points), etc. In some examples, a camera device 102-1 and a radar detection device 102-2 are configured on the vehicle 102. In some examples, a camera device and a plurality of radar detection devices may be configured on the vehicle 102. The radar detection device can be used to detect any multiple directions of: in front, to a front side, behind, and to a rear side of the vehicle. In some examples, a plurality of camera devices and a plurality of radar detection devices are configured on the vehicle 102. The camera device and the radar detection device can be distributed in any multiple directions of: in front, to a front side, behind, and to a rear side of the vehicle to acquire environmental images of each direction and detect objects in each direction.

As shown in FIG. 1, the environment 100 further includes a control unit 120, which can be integrated into the vehicle 102 or deployed on a server. The control unit 120 is communicatively connected with the camera device 102-1 and the radar detection device 102-2, respectively, to communicate in a wired or wireless transmission. The control unit 120 is used to receive an environmental image 106-1 acquired by the camera device 102-1 and radar point cloud data 106-2 acquired by the radar detection device 102-2. The control unit 120 may identify radar point cloud data 110 of the target object from the radar point cloud data 106-2. In some examples, the control unit 120 may extract the radar point cloud data 110 of the target object from the radar point cloud data 106-2. In still other examples, the control unit may determine the radar point cloud data 110 of the target object based on the radar point cloud data 106-2 and the environmental image 106-1. The control unit 120 then determines a text aligned therewith based on the radar point cloud data 110 of the target object and outputs the radar point cloud data 118 that identifies the target object with text.

An object detection model is deployed on the control unit 120 to output object detection results. The object detection model includes an object extraction module 108, a radar feature extraction model 112, and a generation module 116. The object extraction module 108 extracts the radar point cloud data 110 of the target object based on the radar point cloud data 106-2. The radar feature extraction model 112 determines a radar feature Li of the target object based on the radar point cloud data 110 of the target object, and the radar feature Li is aligned with the feature Ti generated by the corresponding text mapped under the feature space, where the i is the natural number within 1~N. Based on the determined radar feature of the target object, the generation module 116 determines the feature generated by the corresponding text aligned with the radar feature 114 of the target object and outputs the radar point cloud data 118 that identifies the target object with text. Here, the radar feature extraction model is pre-trained to achieve the alignment of the radar feature, the image feature, and the text feature by mapping the radar feature to a feature space in which the text feature is aligned with the image feature and aligning the radar feature with the image feature.

In this way, in intelligent driving scenarios, the radar point cloud data that identifies the target object with text can be output based on the acquired radar point cloud data without relying on labeled datasets. This allows for accurate and efficient identification of various types of objects in the environment. In addition, the scheme may also be applied to other object detection scenarios, such as access control and home application scenarios. In access control scenarios, the radar point cloud of the scene of the scene of the exterior of the door can be collected by the radar detection device configured outside the door to determine the various types of people, items, animals, etc. that appear in the scene of the exterior of the door. In a home-based application scenario, the radar point cloud data of an indoor scene can be collected by a radar detection device configured inside the house to determine the various types of people, items, animals, etc. that appear in the indoor scene.

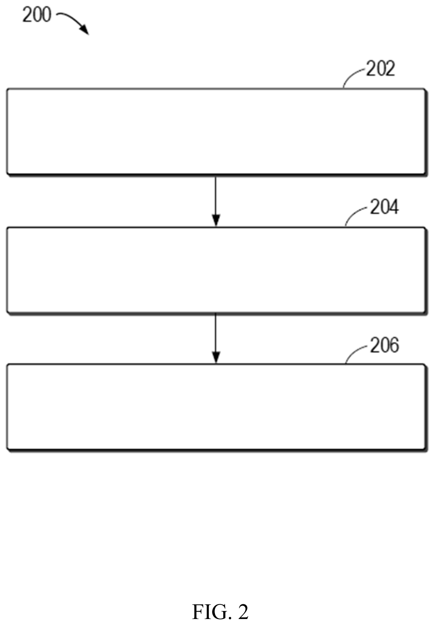

FIG. 2 shows a flow chart of an object detection method 200 of some embodiments of the present disclosure. The method 200 may be performed, for example, by the control unit 120 in the environment 100 shown in FIG. 1. As shown in FIG. 2, at block 202, the method 200 may determine the radar point cloud data of the target object based on radar point cloud input data. For example, in the environment 100 as shown in FIG. 1, the control unit 120 may determine the radar point cloud data 110 of the target object based on the radar point cloud data 106-2 acquired by the radar detection device 102-2. At block 202, determining the radar point cloud data of the target object based on the radar point cloud input data includes determining a target region of the target object based on the radar point cloud input data, and determining the radar point cloud data of the target object based on the target region of the target object. In some embodiments, the radar point cloud data of the target object may be determined by clustering using a classical radar detection device. For example, based on the radar point cloud input data, a radar RPN (Regional Proposal Network) determines the target region of the target object in the radar point cloud data and uses the target region as the radar point cloud data of the target object. In other embodiments, an image RPN determines a target region of the target object in an environmental image based on the environmental image paired with the radar point cloud data. Thereafter, extrinsic calibration is performed based on a geometric relationship between the radar detection device and the camera device (including relative positions and directions of the two in physical space) to map the target region defined in an image to the radar point cloud data, and the radar point cloud data of the target object is obtained by cropping.

At block 204, the method 200 extracts the radar feature of the target object based on the radar point cloud data of the target object. In some embodiments, the radar feature of the target object is extracted from the radar point cloud data of the target object using a pre-trained radar feature extraction model. For example, during the training phase, the radar feature extraction model is trained with a goal of aligning the radar feature with the image feature. Moreover, in training, it learns the alignment relationship between the image feature and the text feature obtained by the image and text matching model, thereby learning the alignment relationship between the radar feature and the text feature through the image feature. After training is complete, the radar feature extraction model can output a radar feature capable that can be aligned with features generated from images and text.

At block 206, the method 200 generates radar point cloud output data that identifies the target object with text based on the radar feature of the target object. Block 206 may be implemented by the generation module 116 in the environment of FIG. 1. In some embodiments, a text feature aligned with the radar feature is determined from the feature space based on the radar feature of the target object. In some embodiments, the radar feature of the target object is mapped to the same feature space in which the image feature is aligned with the text feature. In this way, a text feature aligned with the radar feature can be obtained within the same feature space. In still further embodiments, the radar feature and the image feature of the target object are mapped to one feature space, and the image feature and the text feature are mapped to another feature space. In this way, a text feature aligned with the radar feature can be obtained using the image feature as an intermediary. The target object in the radar point could output data is then labeled with text corresponding to the text feature. The radar point cloud data 118 as shown in FIG. 1 has been labeled by category with text for each target object therein.

By utilizing the radar point cloud data to detect objects in the above described manner, problems of inaccurate image recognition of objects under poor lighting (e.g., at night) can be solved with increased robustness and accuracy of radar detection. After the radar feature of the target object is extracted in the above manner, the text feature aligned with the radar feature in the same or feature space may be determined, or the text feature aligned with the radar feature is determined by the image feature, and then the radar point cloud data identifying the text label is output based on the text corresponding to the text feature. In this way, the radar feature extraction model can achieve the identification of multiple types of objects without relying on manual data labeling.

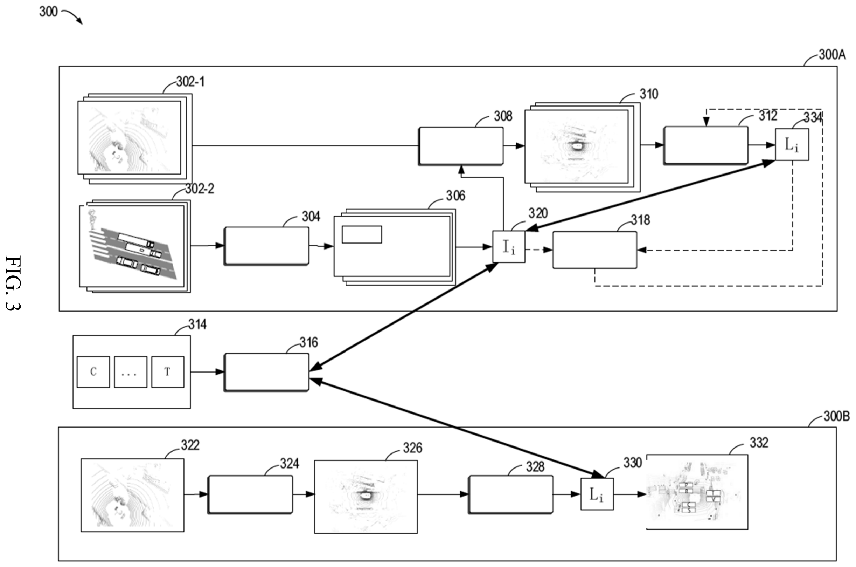

FIG. 3 shows a schematic diagram of a system architecture 300 of object detection of some embodiments of the present disclosure. Block 300A is an architecture for object detection in a training phase, and the architecture includes an image feature extraction model 304, a cropping module 308, and a radar feature extraction model 312. The image feature extraction model 304 extracts a feature drawing of a sample image and a sample region 306 of a sample object based on a sample image 302-2 in training samples, and extracts an image feature 320 of the sample region of the sample object based on the sample region 306 of the sample object. In some non-limiting examples, a feature drawing of the sample image can be extracted using a feature extraction network, and the feature drawing of the sample image can be processed using an image RPN to obtain the sample region of the sample object. Then, using a backbone network such as a Resnet network, the image feature 320 of the sample object is extracted from the sample region of the sample object. The cropping model 308 may extract the radar point cloud data 310 of the sample object in a cropping manner from the radar point cloud data 302-1 paired with the sample image 302-2 in the training samples based on the image feature 320 of the sample object. Thereafter, the radar feature extraction model 312 extracts a radar feature 334 of the sample object. In some examples, the radar feature of the sample object may be extracted by a radar feature extraction model based on the radar point cloud data 310 of the sample object. In still other examples, a sample radar feature may be extracted by the radar feature extraction model based on sample radar point cloud data. The sample region of the sample object is then projected on the sample radar feature to determine the radar feature of the sample object. The radar feature 334 of the sample object and the image feature 320 of the sample object are then both input into a loss calculation module 318, and the loss calculation module 318 calculates the loss value. The radar feature extraction model 312 is trained with the objective of minimizing the distance between the image feature and the radar feature of paired sample objects in the feature space. During training, when the distance between the image feature and the radar feature of the paired sample objects in the feature space is large, parameters of the radar feature extraction model 312 are adjusted using the loss value.

As shown in FIG. 3, during the training phase, the image feature 320 of the sample object is aligned with the text-generated feature in the image and text matching model (not shown in the drawing). The image and text matching model may employ, for example, a Contrastive Language-Image Pretraining model (CLIP), which is trained based on a large amount of data. The image feature and the corresponding text feature are aligned within the feature space of the CLIP model. Accordingly, a text feature generated by a text encoder 316 in the image and text matching model based on text 314 describing an object is aligned with an image feature of the object. In this way, the text 314 aligned with the image feature may be determined based on the image feature. Once the training achieves alignment of the radar feature 334 with the image feature 320 within the feature space, the radar feature 334 may be aligned with the text feature generated based on the text 314, using the image feature 320 as an intermediary. In some examples, the radar feature, the image feature, and the text feature are mapped to the same feature space. In some examples, the radar feature and the image feature are mapped to one feature space, and the image feature and the text feature are mapped to another feature space. Thus, a text feature corresponding to the text can be determined based on the radar feature.

As shown in FIG. 3, block 300B is an architecture for object detection at an inference stage, which includes an extraction module 324 and a determination module 328. Based on the radar point cloud input data 322, the extraction module 324 determines the radar point cloud data 326 of the target object. In some examples, the extraction module 324 may be configured with a radar RPN model, and the radar point cloud data 326 of the target object is extracted from the radar point cloud input data 322 using the radar RPN model. In other examples, the extraction module can be configured with an image RPN model. A target region of the target object is extracted from an input image paired with the radar point cloud input data 322 using the image RPN model, and then the radar point cloud data 326 of the target object is obtained by cropping based on the target region of the target object and the radar point cloud input data 322. The determination module 328 is configured with a radar feature extraction model (e.g., the radar feature extraction model 312) obtained by training according to the training architecture described above. Based on the radar point cloud data 326 of the target object, the radar feature extraction model outputs a radar feature 330 of the target object. When there are multiple target objects, radar features of the multiple target objects are output. During the training phase, the radar feature extraction model has been trained to be capable of extracting radar features aligned with features generated by the corresponding text. Therefore, when inferring, based on the extracted radar feature 330, the text corresponding to the aligned text feature can be determined. The radar point cloud output data 332 that identifies all the target objects with text is then output. As an example in the drawing, based on the radar point cloud data collected by the radar detection device, it is possible to identify target objects within the radar detection range such as a person (P), an infant (B), a truck (T), a car (C), a sports car (S), and a van (V).

In this way, by training the radar feature to be aligned with the image feature, the radar feature can be aligned with the text feature generated by the corresponding text within the same feature space according to the alignment relationship between the image and the text. Optionally, the radar feature and the image feature are aligned within one feature space, the image feature and the text feature are aligned within another feature space, and the image feature can be used as an intermediary to determine a text feature aligned therewith based on the radar feature. In this way, the CLIP model, which has already aligned text and images, can be used to train the radar feature extraction model only, and the radar feature can be aligned with the text feature using image features as an intermediary without the need for additional labeled datasets. This expands the object categories in radar detection technology and enables accurate identification of various types of objects.

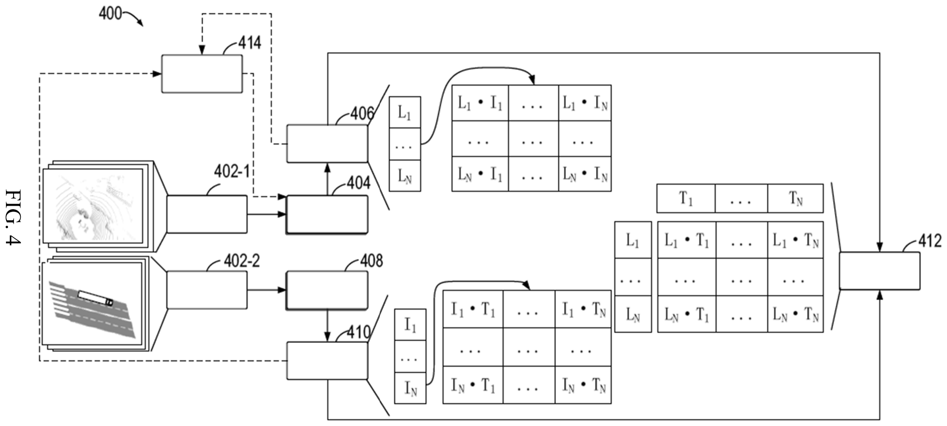

FIG. 4 shows a schematic diagram of a principle process 400 of a radar feature extraction model in a training stage of some embodiments of the present disclosure. The process 400 may include training a radar feature extraction model 404 based on a training sample. The training sample includes a plurality of pairs of sample images and sample radar point cloud data 402-1. In some embodiments, an image 402-2 of a sample object is extracted based on each sample image. In some examples, a sample region of the sample object in the sample image is extracted by an image RPN, and then an image of the sample object in the sample image is obtained by cropping. In some embodiments, the radar feature extraction model 404 determines a radar feature of the sample object based on the sample radar point cloud data 402-1. In some examples, a sample region of the sample object is extracted from the sample image by the image RPN, and the radar point cloud data of the sample object is determined based on the sample region of the sample object and sample radar point cloud data paired with the sample image. A radar feature of the sample object is then determined by the radar feature extraction model based on the radar point cloud data of the sample object. In still other examples, the sample region of the sample object is extracted from the sample image by the image RPN. Based on the sample radar point cloud data, the sample feature is determined by the radar feature extraction model, and the sample region of the sample object is then projected on the sample radar feature to determine the radar feature of the sample object.

As shown in FIG. 4, the sample radar point cloud data 402-1 inputs the radar feature extraction model 404 and outputs a radar feature 406 of the sample object. When there is a plurality of radar point cloud data of the sample object, a plurality of radar features 406 is correspondingly extracted, represented as L1~LN, respectively. The image 402-2 of the sample object is input into an image encoder of an image and text matching model 408, outputting an image feature 410. When there is a plurality of images of the sample object, a plurality of image features 410 is correspondingly output, represented as I1~IN, respectively. The image feature 410 has been aligned with a corresponding text within the feature space through the image and text matching model 408. Here, the image and text matching model 408 is pre-trained. The pre-trained process includes training based on paired image and text datasets. After training, the image feature and the text feature are aligned within the feature space (see the aligned feature space shown next to box 410 in FIG. 4). In some examples, the image and text matching model 408 may employ an existing CLIP model. In some examples, fine-tuning training may be conducted based on the existing CLIP models such that upon updating more texts, the alignment relationship between the image and the text is adjusted based on the more texts. When training the radar feature extraction model 404, the radar feature extraction model is trained with the image feature 410 of the sample object as a supervision signal so that the radar feature of the sample object is aligned with the text feature generated by the corresponding text. In some embodiments, a loss calculation module 414 calculates a loss value based on the input radar feature 406 of the sample object and the image feature 410 of the sample object. When the loss value is large, parameters of the radar feature extraction model 404 are adjusted in reverse until the radar feature and the image feature are aligned within the feature space. By way of image features of the sample object, the text feature and the radar feature that are respectively aligned therewith can be mapped to the same feature space such that the text feature and the radar feature of the sample object are aligned within the feature space 412. For example, the radar feature and the text may be aligned within the feature space using a CLIP-like model or a MOCO-like model.

In this way, the alignment relationship between the radar and the text can be learned by learning the alignment relationship between the image and the text after the radar is trained to align with the image. The process only requires training the radar feature extraction model. The model training architecture is simple and does not need to rely on labeled datasets. It can quickly converge by calculating the similarity between the radar feature and the image feature using similarity loss, and can quickly and accurately identify various unknown objects in the open world.

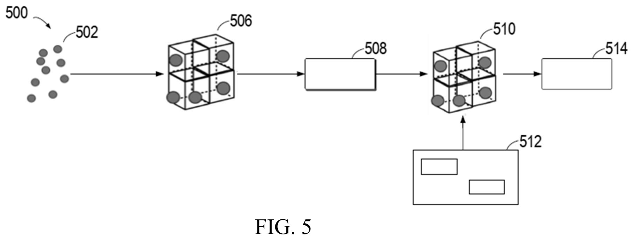

FIG. 5 shows a schematic diagram of a determination process 500 for radar features in a training phase of some embodiments of the present disclosure. The process includes determining a plurality of voxels 506 based on sample radar point cloud data 502. The radar point cloud data 502 is gridded within a 3D space, with each grid corresponding to a certain number of points. Subsequently, a radar feature extraction model 508 determines a sample radar feature by extracting features from the plurality of voxels 506 to obtain a voxelized feature 510. In some examples, the radar feature extraction model 508 may be a multi-layer perceptron that extracts features from a plurality of voxels to obtain the voxelized feature 510. A sample region 512 of the sample object is then projected onto the voxelized feature 510 to obtain a radar feature 514 of the sample object.

Further, in some embodiments, the determination process of the radar feature of the sample object may include determining the radar point cloud data of the sample object. The radar feature of the sample object is then determined based on the radar point cloud data of the sample object. Accordingly, the radar feature extraction of the target object in the inference process can also be obtained with reference to one of the above embodiments.

In this way, the radar feature projected onto the sample region can be extracted, enabling effective identification of the type of the sample object in the radar point cloud data based on the radar feature in the sample region.

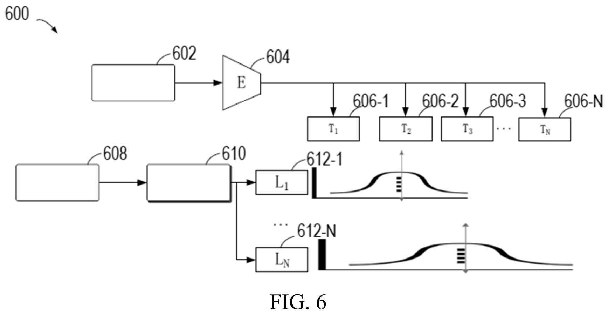

FIG. 6 shows a schematic diagram of a radar-text pairing process 600 at a radar extraction model training phase of some embodiments of the present disclosure. The process 600 may include extracting radar features 612-1, ..., 612-N of a sample object by a radar feature extraction model 610 based on radar point cloud data 608 of the sample object. The process 600 may further comprise determining a text feature aligned with the radar feature of the sample object in the feature space, i.e., pairing text and radar data within the feature space. Within the feature space, an image feature of the object is pre-aligned with a text feature of the object via an image and text matching model, and the radar feature of the object is aligned with the image feature in the radar extraction model training phase. In this way, the text feature aligned with the radar feature may be determined by the image feature, thereby determining the corresponding text. In some examples, a text feature vector and a radar feature vector with the smallest cosine distance are matched within the feature space, and the matching result is determined to be a text feature aligned with the radar feature. As an example shown in FIG. 6, the radar feature 612-1 of a sample object 1 is paired with a feature 606-2 of a generated text, and the radar feature 612-N of a sample object N is paired with a feature 606-N of a generated text. Accordingly, the process is also applicable to the pairing of radar features and text features of the target object in the inference process.

The image and text matching model may be pre-trained as a dataset based on hundreds of millions of image-text pairs. The image and text 602 encode the images and text into feature vectors through an image encoder and a text encoder 604, respectively. The degree of matching between the image and text is then assessed by calculating the cosine similarity between these feature vectors. Once the training is complete, model parameters are fixed and then used in process 600. The image and text matching model parameters are locked while used in process 600. When fine-tuning of the image and text matching model is required, the text encoder can be adjusted taking into account the calculation costs. After adjusting the text encoder, it may be expanded to correspond to more categories of text. The embodiments of the present disclosure can label new categories for previously unrecognized target objects, and can also label more refined categories for previously identified target objects.

In this way, the radar and text are matched using the image as an intermediary, and the type of the object can be identified based on the radar point cloud data. This allows the radar object detection technology to learn the matched text and images and learn more types of objects. It is possible to accurately identify more unknown objects when inferring.

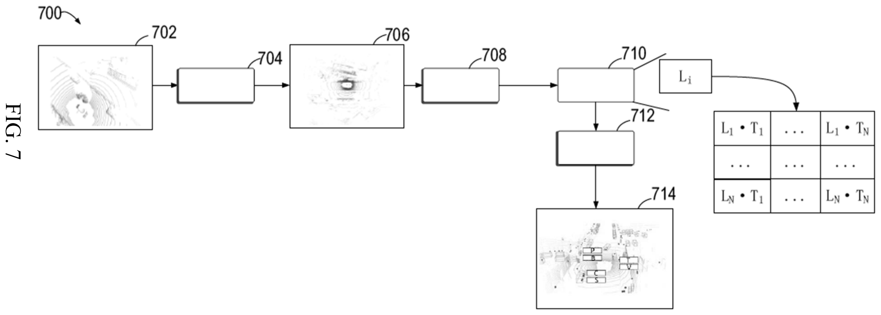

FIG. 7 shows a schematic diagram of an example inference process 700 for object detection using a trained radar feature extraction model of some embodiments of the present disclosure. The process 700 may include determining radar point cloud data 706 of the target object by a determination module 704 based on radar point cloud input data 702. The process 700 may further include, based on the radar point cloud data 706 of the target object, outputting a radar feature 710 by an extraction module 708 configured with a trained radar feature extraction model. In addition, the process may further include, based on the radar feature 710, determining a feature generated by a corresponding text aligned with the radar feature within the feature space by a generation module, thereby generating radar point cloud output data 714 of the target object with a text label.

During the training phase, the radar feature is aligned with a corresponding image feature within the feature space and the image feature is aligned with a corresponding text feature. On this basis, in this way, during the inference stage, there is no need to use image and text models. Instead, by outputting the radar feature by the trained radar feature extraction model, it is possible to find a text feature aligned with the radar feature within the feature space, and further to determine the text corresponding to the text feature, enabling rapid response to radar point cloud input data and outputting detection results in which various categories of target objects are identified.

In one example test, the detection results (radar point cloud data of the identified text) obtained by the radar detection scheme of the embodiments of the present disclosure are compared with a labeled dataset (the dataset contains the radar point cloud data of manually labeled object categories) for verification. With the target object being a stroller as an example, after detecting a plurality of radar point cloud data by the embodiments of the present disclosure, all yielded scores suggesting that the category of the target object is a pedestrian (the score is the average of a model detection precision and recall rate) are less than 0.34. It can be seen that the embodiments of the present disclosure has a high accuracy in identifying the target object as a stroller and has a lower possibility of misidentification as a pedestrian. The embodiments of the present disclosure can obtain the radar point cloud data of the target object using the radar RPN (the radar point cloud data of the target object can also be obtained herein by extracting the target region of the image paired with the radar), so that the target object can be located first, and then the target object at the location can be labeled with the identified category. This allows for more accurate object category identification based on the location of the target, resulting in a lower false recognition rate. It is worth noting that existing radar detection devices, when performing target detection and identification, do not need to identify the object category, and therefore do not need to acquire or utilize the target region of the object. The embodiments of the present disclosure can utilize the target region to identify the category of target object in the corresponding region. When the radar feature extraction model is capable of outputting the radar point cloud data of the target object containing a labeled text based on the input radar point cloud data, the target region of the target object containing location information is expanded to an Open World category.

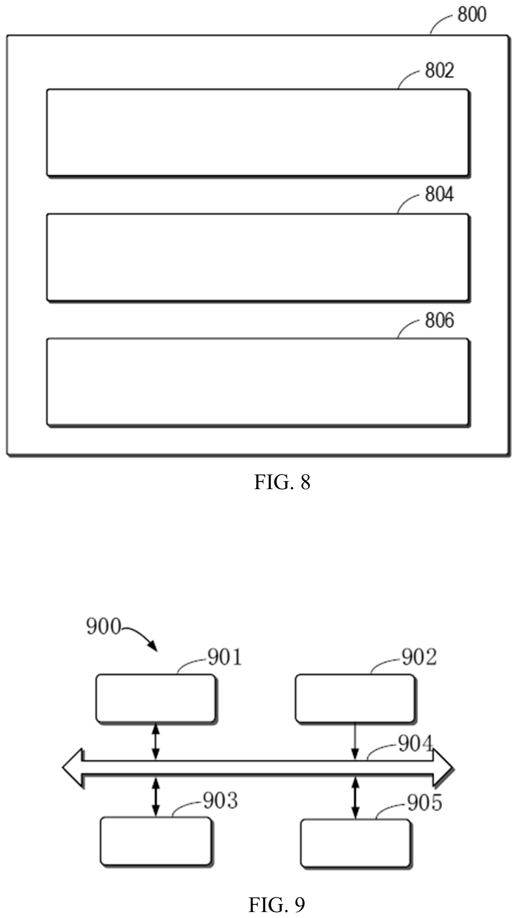

FIG. 8 shows an example block diagram of an object detection apparatus 800 of some embodiments of the present disclosure. The apparatus 800 includes a determination module 802 configured to determine radar point cloud data of a target object based on radar point cloud input data. The apparatus 800 further includes an extraction module 804, which is configured to extract a radar feature of the target object based on the radar point cloud data of the target object. In addition, the apparatus 800 further includes a generation module 806 configured to generate radar point cloud output data that identifies the target object with text based on the radar feature of the target object.

In some embodiments, the determination module 802 is configured to determine a target region of the target object based on the radar point cloud input data, and determine the radar point cloud data of the target object based on the target region of the target object. In some embodiments, the generation module 806 is configured to determine a text feature aligned with the radar feature within a feature space based on the radar feature of the target object, and to generate the radar point cloud output data that identifies the target object with text based on the text feature aligned with the radar feature, where the text feature corresponds to the text.

It will be understood that the apparatus 800 of the present disclosure can achieve at least one of a number of advantages that the method or process described above can achieve. For example, the apparatus 800 can identify a radar feature of a target object based on radar point cloud data collected by the radar detection device, and can determine a feature generated by a corresponding text aligned with the radar feature determined within a feature space, and finally output the radar point cloud data labeled with the target object category. The apparatus can quickly respond to radar point cloud data without relying on labeled datasets and can accurately identify the types of target objects in various scenarios.

FIG. 9 illustrates a schematic block diagram of an exemplary device 900 that may be used to implement the embodiments of the present disclosure. The device 900 may include a control unit in the foregoing method embodiments. As shown in FIG. 9, the device 900 includes a processor 901 that can execute various appropriate actions and processes based on computer program instructions loaded into random access memory (RAM) 903 according to computer program instructions stored in Read Only Memory (ROM) 902. Various programs and data required for the operation of the device 900 may also be stored in the RAM 903. The processor 901, the ROM 902, and the RAM 903 are interconnected through a bus 904. An input/output (I/O) interface 905 is also connected to the bus 904.

The various processes and processing described above, such as the method 200, may be executed by the processor 901. For example, in some examples, the method 200 can be implemented as a software program tangibly contained in a machine-readable medium. In some examples, part or all of the software program may be loaded and/or installed onto the device 900 through the ROM 902. When the software program is loaded into the RAM 903 and executed by the processor 901, one or more actions of the method 200 described above can be performed.

The functions described above herein may be performed at least partially by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code used to implement the method of the present disclosure may be written using any combination of one or more programming languages. This program code can be provided to a processor or controller of a general-purpose computer, special-purpose computer or other programmable data processing devices such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

The present disclosure may be a method, an apparatus, a system, and/or a program product. The program product may comprise a machine-readable storage medium carrying machine-readable program instructions for performing various aspects of the present disclosure. The machine-readable program instructions described herein may be downloaded from the machine-readable storage medium to various computing/processing devices, or downloaded to external computers or external storage devices via networks, such as the Internet, a local area network, a wide area network, and/or a wireless network. The networks may comprise copper transmission cables, optical fiber transmission, wireless transmission, routers, firewalls, switches, gateway computers and/or edge servers. The network adapter card or network interface in each computing/processing device receives machine-readable program instructions from the network and forwards the machine-readable program instructions for storage in the machine-readable storage medium in each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written in any combination of one or more programming languages, the programming languages including object-oriented programming languages such as Smalltalk and C++, as well as conventional procedural programming languages such as "C" language and similar programming languages. The machine-readable program instructions may be fully executed on the user's computer, partially executed on the user's computer, executed as an independent software package, partially executed on the user's computer and partially executed on a remote computer, or fully executed on a remote computer or server. In cases involving remote computers, the remote computer can be connected to the user's computer through any type of network-including a local area network (LAN) or a wide area network (WAN)-or can be connected to an external computer (for example, through the Internet using an Internet Service Provider). In some examples, by using the state information of machine-readable program instructions to personalize electronic circuits, such as a programmable logic circuit, a field-programmable gate array (FPGA), or a programmable logic array (PLA), the electronic circuits can execute machine-readable program instructions, thereby achieving the various aspects of the present disclosure.

In the context of the present disclosure, a machine-readable medium can be a tangible medium that can contain or store programs for use by or in conjunction with an instruction execution system, apparatus, or device. The machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above description, these should not be construed as limiting the scope of the present disclosure. Some features described in the context of separate examples may also be implemented in a single implementation in combination. Conversely, various features described in the context of a single implementation can also be implemented separately or in any suitable sub-combination in multiple implementations.

Although the present subject has been described in languages that are specific to structural features and/or method logical actions, it should be understood that the subject defined in the appended claims is not necessarily limited to the particular features or actions described above. Rather, the specific features and operations described above are merely exemplary forms of implementing the claims.

## Claims

1. An object detection method (200), comprising:
determining (202) radar point cloud data of a target object based on radar point cloud input data;
extracting (204) a radar feature of the target object based on the radar point cloud data of the target object; and
generating (206) radar point cloud output data that identifies the target object with text based on the radar feature of the target object.

2. The method (200) according to claim 1, wherein determining (202) the radar point cloud data of the target object based on the radar point cloud input data comprises:
determining a target region of the target object based on the radar point cloud input data; and
determining the radar point cloud data of the target object based on the target region of the target object.

3. The method (200) according to claim 1 or 2, wherein generating (206) the radar point cloud output data that identifies the target object with text based on the radar feature of the target object comprises:
determining a text feature aligned with the radar feature in a feature space based on the radar feature of the target object, wherein the radar feature of a corresponding object is aligned with a text feature of the corresponding target in the feature space; and
generating radar point cloud output data that identifies the target object with text based on the text feature aligned with the radar feature, wherein the text corresponds to the text feature.

4. The method (200) according to claim 1, wherein extracting (204) the radar feature of the target object based on the radar point cloud data of the target object comprises:
extracting a radar feature of the target object from a trained radar feature extraction model based on the radar point cloud data of the target object, wherein a training process of the radar feature extraction model includes training with an image and text matching model as a teacher model to obtain a radar feature aligned with a text feature generated by a corresponding text.

5. The method (200) according to claim 4, wherein the training process of the radar feature extraction model comprises:
obtaining a training sample comprising a plurality of pairs of sample images and sample radar point cloud data;
extracting an image of a sample object based on the sample image;
determining a radar feature of the sample object by the radar feature extraction model based on sample radar point cloud data paired with the sample image;
determining an image feature of the sample object by the image and text matching model based on the image of the sample object; and
training the radar feature extraction model to align the radar feature of the sample object with a text feature generated by a corresponding text, taking the image feature of the sample object as reference.

6. The method (200) according to claim 5, wherein determining a radar feature of the sample object by the radar feature extraction model based on the sample radar point cloud data paired with the sample image comprises:
determining a sample region of the sample object based on the sample image;
determining the radar point cloud data of the sample object based on the sample region of the sample object and the sample radar point cloud data paired with the sample image; and
determining the radar feature of the sample object by the radar feature extraction model based on the radar point cloud data of the sample object.

7. The method (200) according to claim 5, wherein determining a radar feature of the sample object by the radar feature extraction model based on the sample radar point cloud data paired with the sample image comprises:
determining a sample region of the sample object based on the sample image;
determining a sample radar feature by the radar feature extraction model based on the sample radar point cloud data; and
determining the radar feature of the sample object by projecting the sample region of the sample object on the sample radar feature.

8. The method (200) according to claim 7, wherein determining a sample radar feature by the radar feature extraction model based on the sample radar point cloud data comprises:
determining a plurality of voxels by the radar feature extraction model based on the sample radar point cloud data; and
determining the sample radar feature by extracting voxelized features based on the plurality of voxels by the radar feature extraction model.

9. The method (200) according to claim 5, wherein determining an image feature of the sample object by the image and text matching model based on the image of the sample object comprises:
determining the image feature of the sample object by an image encoder of the image and text matching model based on the image of the sample object, wherein the image feature is aligned with the text feature within a feature space.

10. The method (200) according to claim 5, wherein training the radar feature extraction model to align the radar feature of the sample object with the text feature generated by a corresponding text, taking the image feature of the sample object as reference, comprises:
calculating a loss value using a loss function based on the image feature of the sample object and a radar feature of the sample object; and
adjusting parameters of the radar feature extraction model based on the loss value such that the radar feature is aligned with the image feature, thereby aligning with the text feature.

11. The method (200) according to claim 10, further comprising:
aligning the text feature and the radar feature aligned with the image feature, respectively, within the feature space by the image feature of the sample object.

12. An object detection apparatus (800) comprising:
a determination module (802) configured to determine radar point cloud data of a target object based on the radar point cloud input data;
an extraction module (804) configured to extract a radar feature of the target object based on the radar point cloud data of the target object; and
a generation module (806) configured to generate radar point cloud output data that identifies the target object with text base on the radar feature of the target object.

13. An electronic device (900), comprising:
at least one processor (901); and
a memory (902), coupled to the at least one processor, and having instructions stored thereon, wherein the instructions, when executed by the at least one processor, cause the electronic device to perform the method according to any one of claims 1 to 11.

14. A computer program product, comprising a computer program, wherein the computer program is executed by a processor to implement the method according to any one of claims 1 to 11.

15. A machine-readable storage medium storing machine-executable instructions, wherein the machine-executable instructions are executed by a processor to implement the method according to any one of claims 1 to 11.
